# EUROPÄISCHE PATENTSCHRIFT

(11) **EP 0 633 620 B1**
(45) Veröffentlichungstag und Bekanntmachung des Hinweises auf die Patenterteilung: **22.07.1998**
(21) Anmeldenummer: 94107910.5
(22) Anmeldetag: 21.05.1994
(51) Int. Cl.: H01M 10/52, H01M 4/02

(54) **Galvanisches Element**
Galvanic element
Elément galvanique

(30) Priorität: 03.07.1993 DE 4322190
(43) Veröffentlichungstag der Anmeldung: 11.01.1995
(73) Patentinhaber: VARTA Batterie Aktiengesellschaft, 30419 Hannover (DE)
(72) Erfinder: Krebs, Martin, Dr., D-73489 Jagstzell (DE); Sekler, Josef, D-73479 Ellwangen-Rattstatt (DE)
(74) Vertreter: Kaiser, Dieter Ralf, Dipl.-Ing.

(56) Entgegenhaltungen:
- DE-A- 1 942 091
- GB-A- 2 091 934
- US-A- 3 893 870
- DATABASE WPI Derwent Publications Ltd., London, GB; AN 78-59868A TOKYO SHIBAURA ELEC LTD & JP-B-53 024 620 (TOKYO SHIBAURA ELEC LTD) 21. Juli 1978
- PATENT ABSTRACTS OF JAPAN vol. 10, no. 213 (E-422) 25. Juli 1986 & JP-A-61 051 764 (MATSUSHITA ELECTRIC IND CO LTD)
- PATENT ABSTRACTS OF JAPAN vol. 16, no. 539 (E-1289) 10. November 1992 & JP-A-04 206 475 (MATSUSHITA ELECTRIC IND CO)
- PATENT ABSTRACTS OF JAPAN vol. 5, no. 7 (E-041) 17. Januar 1981 & JP-A-55 137 667 (SANYO ELECTRIC CO LTD)

## Beschreibung

Die Erfindung betrifft ein Verfahren zur Herstellung eines galvanisches Elements mit einer Kathode, einer gegen diese mit einem Separator isolierten Zinkanode und einem aus einer wäßrigen Alkalilösung bestehenden Elektrolyten, welches Mittel zur Verhinderung der Ansammlung von gasförmigem Wasserstoff enthält.

Bekanntlich entwickeln Zinkbatterien wegen der starken Korrosionsanfälligkeit des Zinks in alkalischer Lösung, namentlich beim Stehen, Wasserstoff. Um den damit verbundenen Selbstverbrauch an Zink, der sich als Selbstentladung äußert, möglichst gering zu halten, wird dem Anodenzink zwecks Unterdrückung der Korrosionsreaktion gewöhnlich Quecksilber in Mengen bis zu 10 % zugesetzt. Durch Austausch eines Teils des Quecksilbers gegen andere Legierungselemente wie Indium, Blei, Cadmium oder Gallium konnten in neuerer Zeit sowohl umweltfreundlichere Zinkbatterien als auch solche mit einer deutlich verringerten Gasungsrate verfügbar gemacht werden.

Aber selbst in dem zurückgeschraubten Umfang erweist sich die prinzipiell unvermeidbare Gasentwicklung als störend, zumal sie zu Gehäusedeformationen mit der Gefahr eines Berstens der Zelle oder zur Bildung von Lecks führen kann.

Als Abhilfe wurde in der JP-A-136816/84 bereits die Verwendung eines quecksilberarmen, Inlegierten Anodenzinks und in Verbindung mit diesem die zusätzliche Anordnung eines Legierungsmaterials in der Zelle vorgeschlagen, welches Wasserstoff absorbiert, wobei der Innendruck der Zelle 5 bar nicht übersteigen soll.

Mittel zum Absorbieren von gasförmigem Wasserstoff in einem alkalischen Zink/Braunstein-Element sind auch aus der DE-0S 2 042 266 bereits bekannt. Bei dieser Rundzelle ist im Innenraum der einen Hohlzylinder bildenden Zinkelektrode ein Formkörper in Gestalt eines Pellets angeordnet, welches sich aus einer Verbindung, die mit H₂ reagieren kann, einem Katalysator für diese Wasserstoff verbrauchende Reaktion und einem porösen Bindemittel zusammensetzt. Die nämliche Verbindung ist vorzugsweise MnO₂, also gleich dem aktiven Material der positiven Elektrode, und der Katalysator ein Platinmetall, wahlweise aber auch eine Verbindung von Metallen der VIII. Gruppe des Periodensystems oder Raney-Nickel.

Bei den weiterhin bekannten Alkali-Mangan-Zellen gemäß US-PS 4 925 747 und US-PS 5 162 169 geschieht der Wasserstoffverzehr mit Hilfe einer katalysatorhaltigen Hilfselektrode, die außer einem kohlehaltigen Substrat für den Katalysator gegebenfalls auch noch aktives Material der positiven Elektrode, also MnO₂, mit umfaßt. Die Hilfselektrode ist als scheiben- oder ringförmiger, poröser Preßkörper am Boden der Zelle bzw. über der Ringkathode stets so angeordnet, daß sowohl ein physischer Kontakt als auch, aufgrund einer käfigartigen Metallgewebearmierung der MnO₂-Kathode, ein widerstandsfreier elektrischer Kontakt zu letzterer besteht. Indem der Katalysator, z. B. ein Metall der Platingruppe, überschüssiges Wasserstoffgas aus dem Gasraum der Zelle absorbiert und speichert, wirkt die beschriebene Anordnung wie ein H₂/MnO₂-Kurzschlußelement oder ein Wasserstoff-Rekombinationsreaktor.

Weiterhin sind bei wiederaufladbaren, galvanischen Elementen mit einem alkalischen Elektrolyten Maßnahmen bekannt, die dem Gasverzehr bei Über- oder Tiefentladung dienen. So ist es z.B. aus dem Dokument DE-A 19 42 091 bekannt, die negative Elektrode zur Verbesserung ihrer Sauerstoffresorptionsfähigkeit mit einer Kunststofflösung zu beschichten, die ein elektrisch leitfähiges Pulver enthält. In dem Dokument JP-B 53 024620 wird die Beschichtung der Kanten von positiven Elektrodenplatten geschlossener alkalischer Akkumulatoren beschrieben. Die Beschichtung soll danach mit einer alkali-resistenten Schicht erfolgen, die ein leitfähiges Material und einen Wasserstoffabsorber enthält.

Die bekannten Maßnahmen zum Zweck des Wasserstoffverzehrs machen die Zellenmontage aufwendig; im Falle der DE-0S 2 042 266 sind sie außerdem mit einer komplizierten Zellenkonstruktion verknüpft.

Der Erfindung liegt daher die Aufgabe zugrunde, ein Verfahren zur Herstellung von alkalischen Zinkzellen anzugeben, bei dem mit möglichst einfachen Mitteln eine Ansammlung von Wasserstoffgas und damit ein gefährlicher Anstieg des Innendrucks verhindert wird. Die Aufgabe wird erfindungsgemäß durch das Verfahren zur Herstellung von alkalischen Zinkzellen gelöst, wie es in Patentanspruch 1 definiert ist.

Es hat sich gezeigt, daß das Aufbringen einer sehr einfache Mischung, die lediglich aus einem zur Absorption von Wasserstoff befähigten Katalysator und einem Haftmittel besteht und die auf denkbar einfache Weise appliziert wird, zu dem gewünschten Erfolg führt.

Als geeignete Katalysatoren kommen katalytisch aktive Metalle wie z. B. Raney-Metalle in Frage, ferner Salze und Oxide von Blei, Nickel, Titan, Lanthan, Chrom und Tantal oder Legierungen dieser Metalle untereinander, auch im Gemisch mit Kohlenstoff. Ein erfindungsgemäß bevorzugter Katalysator ist Raney-Nickel.

Raney-Nickel ist als Katalysator von den Brennstoffzellen her bekannt, wo in seiner Gegenwart die elektrochemische Umsetzung von Wasserstoff zu Wasser erfolgt. Bei Wasserstoffentwicklungszellen dagegen fördert Raney-Nickel die Entwicklung von Wasserstoff aus Wasser. Im ersten Fall wird die Reaktion durch ein positives (anodisches) Potential begünstigt, im zweiten Fall durch ein negatives (kathodisches) Potential.

Im Falle der Erfindung hat es sich in dem Bestreben, den Wasserstoffdruck in der Zelle abzubauen, als sehr günstig erwiesen, wenn der Katalysator zu den Kathodenringen in elektrischen Kontakt gebracht wird. Da diese auf einem sehr hohen positiven Potential liegen, an welchem auch der Katalysator teil hat, ist die Bedingung erfüllt, unter der Wasserstoff zu Wasser umgesetzt wird, d. h. eine Rekombination stattfindet. Tatsächlich konnte nachgewiesen werden, daß ein außerordentlich rascher Wasserstoffverzehr erfolgt.

Zur Befestigung des Katalysators am Kathodenring dient erfindungsgemäß ein Aktivkleber als Haftmittel von viskoser Konsistenz, der mit dem Katalysatormetall, vorzugsweise Raney-Nickel, untermischt ist.

Das Mischungsverhältnis Katalysator/Aktivkleber ist unkritisch, jedoch dürfen die Katalysator-Partikel in dem Kleber nicht so stark "verdünnt" sein, daß ihre wechselseitigen Kontakte abreißen und damit auch ihre elektronenleitende Verbindung zur potentialbestimmenden Kathode unterbrochen oder mit einem hohen Widerstand belastet ist. Andererseits muß die Kleber-Menge ausreichend für eine sichere Fixierung des Katalysators an der Kathodenoberfläche sein.

Die Applikation der Klebermischung erfolgt mittels Pinsel, Spritze oder Stempel. Dadurch ist auch eine leichte Dosierung der Katalysatormenge möglich.

Die Aufbringung des katalysatorhaltigen Aktivklebers auf die Kathode geschieht zweckmäßig nach dem Einpressen der Kathodenringe. Es kann der Aktivkleber jedoch auch auf andere Bestandteile der Zelle aufgetragen werden, die zumindest an der behandelten Stelle beim Zusammenbau mit einem der Kathodenringe in Berührung kommen, z. B. die Bodenecke des Kathodenbechers oder der Separator auf der den Kathodenringen zugekehrten Seite.

In mehreren Versuchsreihen, an denen jeweils 5 alkalische Rundzellen beteiligt waren, wurden der Einfluß der Auftragungstechnik und der Einfluß der Katalysatormenge auf die Wasserstoffabsorption getestet. Als Maß für die Absorptionswirkung bzw. Wasserstoff rekombination diente das in den Zellen nach 28-tägiger Lagerung bei 70°C ermittelte Gasvolumen.

Die Versuchszellen waren Standardzellen mit üblicher positiver MnO₂-Masse und einem Bidotierten Gelzink.

In einer Tabelle sind die gemessenen Gasvolumina in Abhängigkeit von der eingesetzten Menge Raney-Nickel und von der Auftragungsart festgehalten. Die Raney-Nickelmengen sind stets auf 1,3 g Anodenzink in der Zelle bezogen und durch Wiegen bestimmt. Die Versuchsnummern beziehen sich auf die Auftragungsart und bedeuten:
1 = ohne Katalysator
2 = ganzflächige Beschichtung des oberen Ringes
3 = Auftragen eines Punktes
4 = Auftragen von 2 Punkten
5 = Auftragen von 4 Punkten
6 = Aufstempeln von einem Punkt
7 = 4 Punkte in der Ecke Becher/Ring

Alle Zellen der Tabelle sind Mittelwerte aus jeweils 5 Meßdaten.

| | 1 | 2 | 3 | 4 | 5 | 6 | 7 |
|---|---|---|---|---|---|---|---|
| Raney-Ni g/Zelle | 0 | 0,248 | 0,025 | 0,089 | 0,22 | 0,024 | 0,085 |
| Gasvolumen V in ml | 9,2 | 4,4 | 5,5 | 3,8 | 3,1 | 4,2 | 3,3 |

Zwei Figuren veranschaulichen abschließend den Gegenstand der Erfindung.

Figur 1 zeigt eine grafische Auswertung der Tabelle.

Figur 2 zeigt günstige Plazierungen der erfindungsgemäßen Mischung im Innem einer alkalischen Zinkzelle.

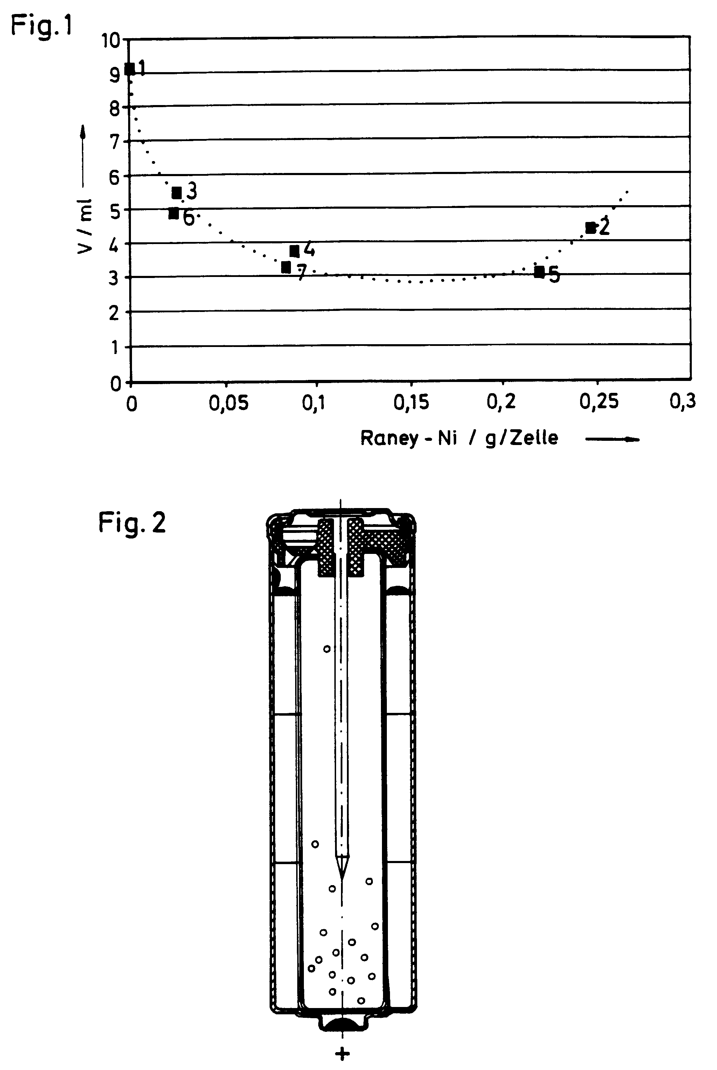

In Figur 1 sind die Raney-Nickelmengen und die Gasvorlumina grafisch gegeneinander aufgetragen. Es ist ersichtlich, daß die erfindungsgemäße Wirkung der Katalysator-Aktivklebermischung ausweislich der geringen Gasansammlung bei einer Raney-Nickel-Menge zwischen etwa 0,06 g und 0,25 g, vorzugsweise im Bereich 0,09 g bis 0,23 g, besonders günstig ist.

Zur Figur 2 bedarf es keiner weiteren Erläuterung. Dargestellt ist hier eine Zelle des Typs LR6 (gemäß Publ. IEC 86, sogenannte Mignonzelle).

## Patentansprüche

1. Verfahren zur Herstellung eines galvanischen Elements mit einer MnO₂-Kathode, einer gegen diese durch einen Separator isolierten Zinkanode und einem aus einer wäßrigen Alkalilösung bestehenden Elektrolyten, wobei das galvanische Element Mittel zur Verhinderung der Ansammlung von gasförmigen Wasserstoff enthält, dadurch gekennzeichnet, daß eine Mischung eines zur Rekombination von Wasserstoff befähigten Katalysatormaterials mit einem Aktivkleber auf die Oberfläche des Kathodenkörpers oder einer mit der Kathode in Kontakt stehenden Oberfläche eines Zellenbestandteils an mehreren Punkten, aufgetropft oder aufgestempelt wird.

2. Verfahren nach Anspruch 1, dadurch gekennzeichnet, daß als Katalysatormaterial Raney-Nickel verwendet wird.

3. Verfahren nach Anspruch 1 und/oder 2, dadurch gekennzeichnet, daß die Mischung auf die an der Oberfläche der Kathode anliegende Seite des Separator vor dem Zusammmenbau der Zelle aufgebracht wird.

4. Verfahren nach einem oder mehren der Ansprüche 1 bis 3, dadurch gekennzeichnet, daß pro 1,3 g Anodenzink in der Zelle 0,06 g bis 0,25 g, vorzugsweise 0,09 g bis 0,23 g, Raney-Nickel eingesetzt werden.

## Claims

1. Process for making a galvanic cell having an MnO₂ cathode, a zinc anode which is isolated therefrom by a separator, and an electrolyte which comprises an aqueous alkali metal solution, with the galvanic cell containing means for preventing the accumulation of hydrogen gas, characterised in that by dropping or stamping at a plurality of points there is applied to the surface of the cathode body or a cell component surface which is in contact with the cathode a mixture of a catalyst material which is enabled to recombine hydrogen and an active adhesive.

2. Process according to Claim 1, characterised in that Raney nickel is used as the catalyst material.

3. Process according to Claim 1 and/or 2, characterised in that the mixture is applied before cell assembly to that face of the separator which bears on the surface of the cathode.

4. Process according to one or more of Claims 1 to 3, characterised in that from 0.06 g to 0.25 g, preferably from 0.09 g to 0.23 g, of Raney nickel are utilised per 1.3 g of anode zinc in the cell.

## Revendications

1. Procédé de fabrication d'un élément galvanique avec une cathode en MnO₂, une anode en zinc, isolée par un séparateur vis à vis de celle-ci, et un électrolyte, consistant en une solution alcaline aqueuse, l'élément galvanique contenant des moyens pour empêcher l'accumulation d'hydrogène sous forme gazeuse,
caractérisé en ce qu'
on applique par gouttes ou l'on tamponne en plusieurs points un mélange d'une matière de catalyseur susceptible de provoquer la recombinaison de l'hydrogène, avec un adhésif actif sur la surface du corps de la cathode ou sur une surface d'une partie constitutive de l'élément, qui est en contact avec la cathode.

2. Procédé selon la revendication 1,
caractérisé en ce qu'
on utilise comme matière de catalyseur du nickel de Raney.

3. Procédé selon la revendication 1 et/ou 2,
caractérisé en ce que
le mélange est déposé sur le côté du séparateur qui repose sur la surface de la cathode avant l'assemblage de l'élément.

4. Procédé selon une ou plusieurs des revendications 1 à 3,
caractérisé en ce qu'
on utilise pour 1,3 g de zinc dans l'anode de l'élément 0,06 g à 0,25 g, et de préférence de 0,09 g à 0,23 g de Nickel de Raney.
